# EUROPÄISCHE PATENTANMELDUNG

(11) **EP 4 488 541 A1**
(43) Veröffentlichungstag der Anmeldung: **08.01.2025**
(21) Anmeldenummer: 24182139.6
(22) Anmeldetag: 14.06.2024
(51) Int. Cl.: F16F 9/00, F16F 9/04, F16F 9/05

(54) **LUFTFEDER, INSBESONDERE FÜR STRASSENFAHRZEUGE UND/ODER FÜR SCHIENENFAHRZEUGE**

(30) Priorität: 07.07.2023 DE 102023206463
(71) Anmelder: ContiTech Deutschland GmbH, 30175 Hannover (DE)
(72) Erfinder: Leinemann, Marc, 30175 Hannover (DE); Gerami-Manesch, Bijan, 30175 Hannover (DE); Werhahn, Max Konstantin, 30175 Hannover (DE); Möllenbruck, Bernd, 30175 Hannover (DE)
(74) Vertreter: Continental Corporation

(57) **Zusammenfassung**

Die Erfindung betrifft eine Luftfeder (1), insbesondere für Straßenfahrzeuge und/oder für Schienenfahrzeuge, mit einem Kolben (10), einer Platte (12) und einem Balg (11), welcher zwischen Kolben (10) und Platte (12) angeordnet ist, wobei Kolben (10), Platte (12) und Balg (11) gemeinsam eine Druckkammer (A) bilden. Die Luftfeder (1) ist gekennzeichnet durch wenigstens einen offenporigen Schaumstoffkörper (14), welcher luftführend mit der Druckkammer (A) in Kontakt steht.

## Beschreibung

Die Erfindung betrifft eine Luftfeder, insbesondere für Straßenfahrzeuge und bzw. oder für Schienenfahrzeuge, gemäß des Patentanspruchs 1 sowie ein Fahrzeug mit wenigstens einer derartigen Luftfeder gemäß des Patentanspruchs 10.

Zur Dämpfung von Schwingungen können je nach Anwendung verschiedene Arten von Federungssysteme eingesetzt werden. Hierzu gehören auch die Luftfederungen, welche die Kompressibilität von Gasen und insbesondere von Luft ausnutzen.

Eine weit verbreitete Bauart einer Luftfederung sind Luftfedern mit konstantem Volumen in Regellage. In diesem Fall wird die Luft üblicherweise in einem Rollbalg eingeschlossen, welcher mit weiteren Beschlagteilen wie bei Straßenfahrzeugen mit einem Deckel oder einer Bördelplatte und einem Abrollkolben luftdicht verbunden ist. Dabei ist der Kolben sowohl mit dem unteren Ende des Rollbalgs verbunden als auch üblicherweise mit einer Achse bei Straßenfahrzeugen bzw. mit einem Fahrgestell bei Schienenfahrzeugen. Das obere Ende des Rollbalgs ist mit einem Deckel oder einer Bördelplatte verbunden, welche mit der Karosserie bzw. mit dem Chassis des Fahrzeugs verbunden ist. Bei Schienenfahrzeugen wird der Balg zwischen einer Gleitplatte oben und dem Kolben unten angeordnet.

Der Rollbalg ist über den Kolben gestülpt und rollt unter Druck auf diesem ab. Die Luftfeder kann durch einen Kompressor mit Druckluft versorgt werden, so dass in Abhängigkeit von der Beladung Luft zu- oder abgepumpt werden kann, um das Füllvolumen und somit die Niveaulage des Fahrzeugs konstant zu halten. Derartige Luftfedern werden bei verschiedenen Arten von Fahrzeugen wie insbesondere bei Straßenfahrzeugen wie insbesondere Lastkraftwagen, Anhänger und Omnibusse sowie Schienenfahrzeugen eingesetzt.

Bei fahrwerksbezogenen Anwendungen von Luftfedern, meist in Nutzfahrzeugen, besteht das Federungssystem aus einer Luftfeder, die parallel zu einem hydraulischen Dämpfer betrieben wird. Der Dämpfer wird benötigt, um zu verhindern, dass das System bei der Resonanzfrequenz frei schwingt.

Nachteilig hieran ist, dass der zusätzliche Komponentendämpfer Bauraum benötigt, Wärme erzeugt und einem Verschleiß unterliegt. Darüber hinaus erhöht sich das Gewicht. Auch enthält der zusätzliche Komponentendämpfer Hydraulikflüssigkeit.

Nachteilig ist insbesondere, dass der zusätzliche Komponentendämpfer eine eingeschränkte Funktion bei hohen Frequenzen aufweist, was zu unerwünschtem NVH-Verhalten (Noise, Vibration, Harshness) führt, d.h. zur Erzeugung von hör- oder spürbaren Schwingungen in Kraftfahrzeugen oder an Maschinen führen kann.

Generell kann eine derartige Dämpfungsfunktion bei Luftfedern auch dadurch realisiert werden, indem die Luft durch ein Drosselklappengehäuse gepresst wird, das zwei Volumen verbindet. Um ein akzeptables Maß an Dämpfungsfunktion zu realisieren, benötigen diese Systeme jedoch entweder ein großes zusätzliches Volumen oder ein komplexes Mehrkammer-Luftfeder-/Luftklappendesign. Da Bauraum stets und insbesondere in Fahrzeugen begrenzt ist, kann insbesondere bei Fahrzeugen kein derartig großes zusätzliches Volumen vorgesehen werden. In jedem Fall führt ein komplexes Mehrkammer-Luftfeder-/Luftklappendesign zu signifikanten zusätzlichen Kosten hinsichtlich Konstruktionsaufwand, Herstellungsaufwand und Montageaufwand.

Der Erfindung liegt die Aufgabe zugrunde, eine Luftfeder der eingangs beschriebenen Art so zu verbessern, dass eine Dämpfung einfacher, kostengünstiger, leichter, bauraumsparender und bzw. oder wirksamer dämpfend als bisher bekannt erreicht werden kann. Zumindest soll eine Alternative zu den bekannten Möglichkeiten geschaffen werden.

Die Aufgabe wird erfindungsgemäß durch eine Luftfeder mit den Merkmalen gemäß Patentanspruch 1 sowie durch ein Fahrzeug mit den Merkmalen des Patentanspruchs 10 gelöst. Vorteilhafte Weiterbildungen sind in den Unteransprüchen beschrieben.

Somit betrifft die vorliegende Erfindung eine Luftfeder, insbesondere für Straßenfahrzeuge und bzw. oder für Schienenfahrzeuge, mit einem Kolben, einer Platte und einem Balg, welcher zwischen Kolben und Platte angeordnet ist, wobei Kolben, Platte und Balg gemeinsam eine Druckkammer bilden.

Die Luftfeder ist gekennzeichnet durch wenigstens einen offenporigen Schaumstoffkörper, welcher luftführend mit der Druckkammer in Kontakt steht.

Durch das Hinzufügen eines Körpers aus offenporigem Schaumstoff zur Druckkammer einer Luftfeder wirken die Poren des Schaums als eine große Anzahl von Mikrodrosseln, die die Schaumblasen als Mikrovolumen verbinden, um eine dämpfende Funktionalität zu gewährleisten. Dies kann eine dämpfende Wirkung, insbesondere zur Vermeidung bzw. zur Dämpfung von Resonanzen, ermöglichen, ohne die eingangs genannten Nachteile aufzuweisen.

Gemäß einem Aspekt der Erfindung ist der offenporige Schaumstoffkörper innerhalb eines Kolbeninnenraums des Kolbens angeordnet, wobei der Kolbeninnenraum, vorzugsweise mittels einer Kolbenöffnung, luftführend mit der Druckkammer in Kontakt steht. Hierdurch kann die Druckkammer vom offenporigen Schaumstoffkörper freigehalten werden. Gleichzeitig kann das Volumen, welches der Kolben einnimmt, mittels eines entsprechenden Hohlraums dort genutzt werden, um keinen zusätzlichen Bauraum außerhalb des Luftfeder selbst zu verwenden.

Gemäß einem weiteren Aspekt der Erfindung weist der offenporige Schaumstoffkörper ein Hohlvolumen auf und umschließt dieses. Hierdurch kann eine Hohlkammer innerhalb des offenporigen Schaumstoffkörpers geschaffen werden, um die Dämpfungseigenschaften des offenporigen Schaumstoffkörpers weiter zu beeinflussen. Dies kann die Gestaltungsmöglichkeiten erhöhen.

Gemäß einem weiteren Aspekt der Erfindung ist der offenporige Schaumstoffkörper innerhalb der Druckkammer angeordnet. In diesem Fall kann das Innenvolumen des Balgs, d.h. die Druckkammer, genutzt werden, um den offenporigen Schaumstoffkörper innerhalb der Luftfeder anzuordnen. Dies kann den Kontakt, d.h. den Luftaustausch, zwischen dem Innenvolumen des Balgs und dem offenporigen Schaumstoffkörper verbessern. Auch kann dies die konstruktive Veränderung bekannter Luftfedern geringhalten, um den offenporigen Schaumstoffkörper dort zu verwenden.

Gemäß einem weiteren Aspekt der Erfindung ist der offenporige Schaumstoffkörper innerhalb der Druckkammer direkt zwischen dem Kolben und der Platte angeordnet. Dies kann eine möglichst zentrale Anordnung des offenporigen Schaumstoffkörpers ermöglichen, was der Wirkung zugutekommen kann.

Gemäß einem weiteren Aspekt der Erfindung ist der offenporige Schaumstoffkörper innerhalb der Druckkammer auf dem Kolben oder unter der Platte angeordnet. Dies kann die Umsetzung vereinfachen, indem der offenporige Schaumstoffkörper dort platziert und befestigt werden kann.

Gemäß einem weiteren Aspekt der Erfindung ist der offenporige Schaumstoffkörper federelastisch ausgebildet. Hierdurch kann der offenporige Schaumstoffkörper zusätzlich auch als dämpfender Anschlag innerhalb der Druckkammer verwendet werden.

Gemäß einem weiteren Aspekt der Erfindung ist der offenporige Schaumstoffkörper außerhalb der Druckkammer angeordnet, wobei der offenporige Schaumstoffkörper luftführend mit der Druckkammer in Kontakt steht. Dies kann eine alternative Möglichkeit der Umsetzung darstellen. In diesem Fall kann die Luftfeder an sich im Wesentlichen unverändert bleiben und die dämpfende Funktion des offenporigen Schaumstoffkörpers nach außerhalb der Druckkammer bzw. der Luftfeder an sich verlagert werden. Dies kann den Gestaltungsspielraum erhöhen.

Gemäß einem weiteren Aspekt der Erfindung ist der offenporige Schaumstoffkörper innerhalb eines Behälters angeordnet, wobei der Behälter mittels einer Behälterverbindung luftführend mit der Druckkammer in Kontakt steht. Dies kann eine konkrete Möglichkeit der Umsetzung darstellen.

Die vorliegende Erfindung betrifft auch ein Fahrzeug, vorzugsweise ein Straßenfahrzeug oder ein Schienenfahrzeug, mit wenigstens einer Luftfeder wie zuvor beschrieben, wobei die Luftfeder einen Kolben, eine Platte und einen Balg aufweist, welcher zwischen Kolben und Platte angeordnet ist, wobei Kolben, Platte und Balg gemeinsam eine Druckkammer bilden. Die Luftfeder ist gekennzeichnet durch wenigstens einen offenporigen Schaumstoffkörper, welcher luftführend mit der Druckkammer in Kontakt steht. Dies kann die Umsetzung und Nutzung von erfindungsgemäßen Luftfedern bei Fahrzeugen wie insbesondere bei Straßenfahrzeugen und bzw. oder bei Schienenfahrzeugen ermöglichen.

Mehrere Ausführungsbeispiele und weitere Vorteile der Erfindung werden nachstehend im Zusammenhang mit den folgenden Figuren erläutert. Darin zeigt:
- Fig. 1: eine schematische Schnittdarstellung einer erfindungsgemäßen Luftfeder gemäß eines ersten Ausführungsbeispiels;
- Fig. 2: eine schematische Schnittdarstellung einer erfindungsgemäßen Luftfeder gemäß eines zweiten Ausführungsbeispiels
- Fig. 3: eine schematische Schnittdarstellung einer erfindungsgemäßen Luftfeder gemäß eines dritten Ausführungsbeispiels
- Fig. 4: eine schematische Schnittdarstellung einer erfindungsgemäßen Luftfeder gemäß eines vierten Ausführungsbeispiels; und
- Fig. 5: eine schematische Schnittdarstellung einer erfindungsgemäßen Luftfeder gemäß eines fünften Ausführungsbeispiels.

Die Beschreibung der Figuren erfolgt in kartesischen Koordinaten mit einer Längsrichtung X, einer zur Längsrichtung X senkrecht ausgerichteten Querrichtung (nicht dargestellt) sowie einer sowohl zur Längsrichtung X als auch zur Querrichtung senkrecht ausgerichteten vertikalen Richtung Z. Die Längsrichtung X kann auch als Tiefe X, die Querrichtung auch als Breite und die vertikale Richtung Z auch als Höhe Z bezeichnet werden. Die Längsrichtung X und die Querrichtung bilden gemeinsam die Horizontale, welche auch als horizontale Ebene bezeichnet werden kann. Die Längsrichtung X, die Querrichtung und die vertikale Richtung Z können gemeinsam auch als Raumrichtungen X, Z bzw. als kartesische Raumrichtungen X, Z bezeichnet werden.

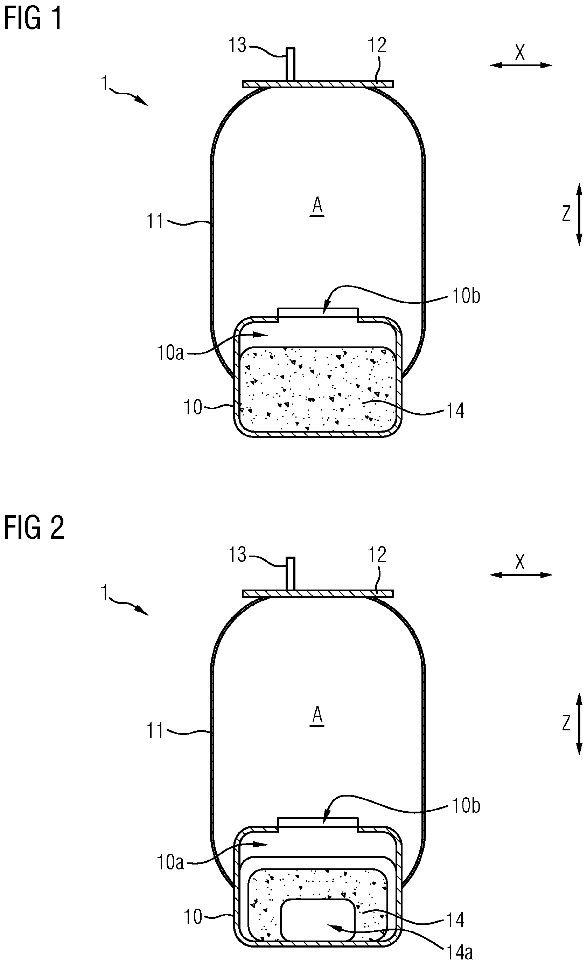

Fig. 1 zeigt eine schematische Schnittdarstellung einer erfindungsgemäßen Luftfeder 1 gemäß eines ersten Ausführungsbeispiels. Die Luftfeder 1 kann auch als Luftfedereinrichtung 1 bezeichnet werden.

Die Luftfeder 1 weist einen Kolben 10 auf, welcher auf einem Fahrgestell (nicht dargestellt) eines Fahrzeugs wie beispielsweise eines Schienenfahrzeugs befestigt ist. Der Kolben 1 kann auch als Abrollkolben 1 bezeichnet werden.

Auf bzw. seitlich an dem Kolben 10 ist eine Halterung (nicht dargestellt) angeordnet, welche radial außenseitig einen Balg 11 an dessen unterem Ende hält. Die Halterung kann daher auch als Kragen bezeichnet werden.

An seinem oberen Ende wird der Balg 11 in diesem Ausführungsbeispiel von einer Platte 12 gehalten, welche mit einer Karosserie (nicht dargestellt) des Fahrzeugs verbunden ist. Je nach Fahrzeug kann die Platte 12 eine Gleitplatte 12 oder eine Bördelplatte 12 sein.

Von dem Kolben 10, dem Balg 11 und der Platte 12 wird ein Innenvolumen A der Luftfeder 1 eingeschlossen, welches auch als Druckkammer A bezeichnet werden kann bzw. eine Druckkammer A bildet. Der Druck innerhalb der Druckkammer A kann mittels einer Zugangsöffnung 13, welche in der Platte 12 vorgesehen ist, verändert werden.

Gemäß dem ersten Ausführungsbeispiel der Figur 1 ist der Kolben 10 hohl ausgebildet, so dass dort ein Kolbeninnenraum 10a ausgebildet wird, welcher entlang der vertikalen Richtung Z von oben durch eine Kolbenöffnung 10b zugänglich ist. Somit steht der Kolbeninnenraum 10a luftführend mit der Druckkammer A in Verbindung.

Innerhalb des Kolbeninnenraums 10a ist ein offenporiger Schaumstoffkörper 14 angeordnet, dessen Poren als eine große Anzahl von Mikrodrosseln wirken können, welche die Schaumblasen als Mikrovolumen verbinden, um eine dämpfende Funktionalität zu gewährleisten. Dies kann eine dämpfende Wirkung, insbesondere zur Vermeidung bzw. zur Dämpfung von Resonanzen, ermöglichen.

Fig. 2 zeigt eine schematische Schnittdarstellung einer erfindungsgemäßen Luftfeder 1 gemäß eines zweiten Ausführungsbeispiels. In diesem Fall weist der offenporige Schaumstoffkörper 14 ein Hohlvolumen 14a auf und umschließt dieses.

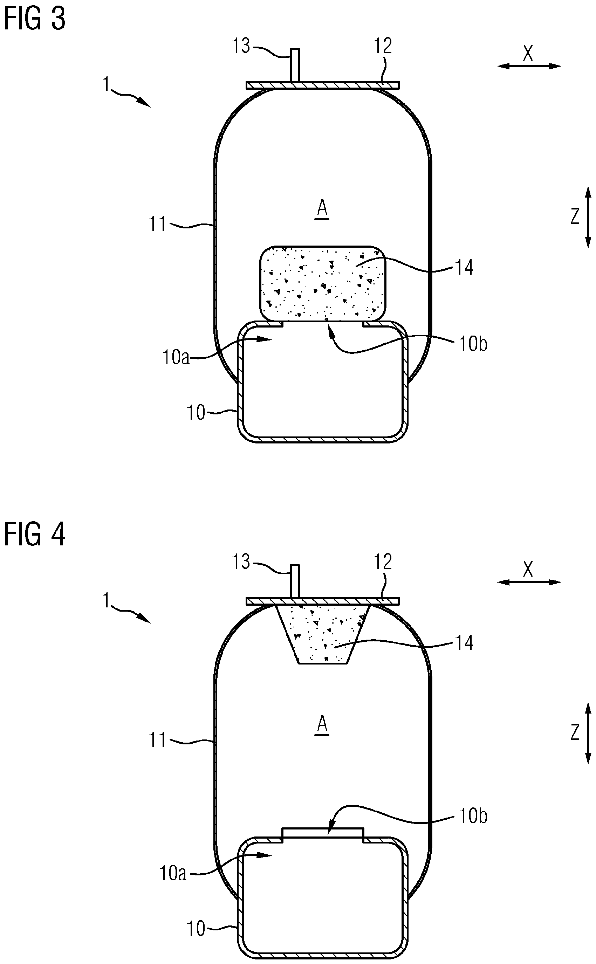

Fig. 3 zeigt eine schematische Schnittdarstellung einer erfindungsgemäßen Luftfeder 1 gemäß eines dritten Ausführungsbeispiels. In diesem Fall ist der offenporige Schaumstoffkörper 14 innerhalb der Druckkammer A direkt zwischen dem Kolben 10 und der Platte 11 angeordnet. Dabei ist der offenporige Schaumstoffkörper 14 innerhalb der Druckkammer A auf dem Kolben 10 angeordnet. Ferner ist der offenporige Schaumstoffkörper 14 federelastisch ausgebildet. Hierdurch kann der offenporige Schaumstoffkörper 14 zusätzlich als elastischer Federanschlag dienen.

Fig. 4 zeigt eine schematische Schnittdarstellung einer erfindungsgemäßen Luftfeder 1 gemäß eines vierten Ausführungsbeispiels. In diesem Fall ist der federelastische offenporige Schaumstoffkörper 14 unter der Platte 11 angeordnet.

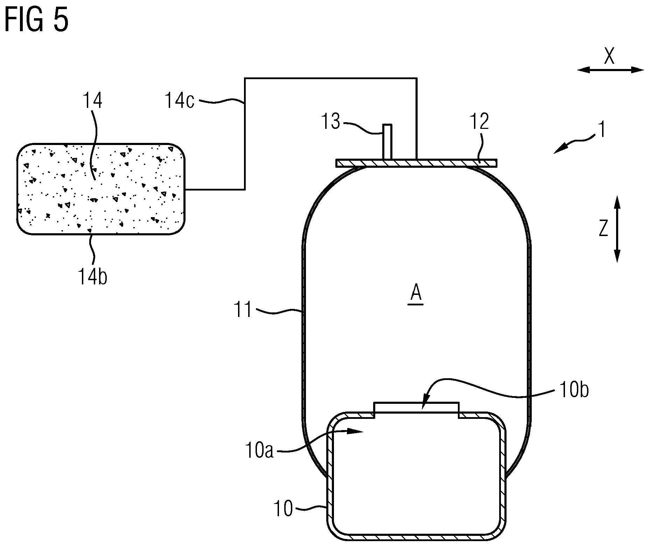

Fig. 5 zeigt eine schematische Schnittdarstellung einer erfindungsgemäßen Luftfeder 1 gemäß eines fünften Ausführungsbeispiels. In diesem Fall ist der offenporige Schaumstoffkörper 14 außerhalb der Druckkammer A innerhalb eines Behälters 14b angeordnet. Dabei steht der Behälter 14b mittels einer Behälterverbindung 14c luftführend mit der Druckkammer A in Kontakt.

### Bezugszeichenliste (Teil der Beschreibung)

- A: Druckkammer; Innenvolumen

- X: Längsrichtung; Tiefe
- Z: vertikale Richtung; Höhe

- 1: Luftfeder; Luftfedereinrichtung
- 10: Kolben; Abrollkolben
- 10a: Kolbeninnenraum
- 10b: Kolbenöffnung
- 11: Balg
- 12: Platte; Gleitplatte; Bördelplatte
- 13: Zugangsöffnung der Druckkammer A
- 14: offenporiger Schaumstoffkörper
- 14a: Hohlvolumen des offenporigen Schaumstoffkörpers 14
- 14b: Behälter
- 14c: Behälterverbindung

## Patentansprüche

1. Luftfeder (1), insbesondere für Straßenfahrzeuge und/oder für
Schienenfahrzeuge,
mit einem Kolben (10), einer Platte (12) und einem Balg (11), welcher zwischen Kolben (10) und Platte (12) angeordnet ist,
wobei Kolben (10), Platte (12) und Balg (11) gemeinsam eine Druckkammer (A) bilden,
**gekennzeichnet durch**
wenigstens einen offenporigen Schaumstoffkörper (14), welcher luftführend mit der Druckkammer (A) in Kontakt steht.

2. Luftfeder (1) nach Anspruch 1,
wobei der offenporige Schaumstoffkörper (14) innerhalb eines Kolbeninnenraums (10a) des Kolbens (10) angeordnet ist,
wobei der Kolbeninnenraum (10a), vorzugsweise mittels einer Kolbenöffnung (10b), luftführend mit der Druckkammer (A) in Kontakt steht.

3. Luftfeder (1) nach Anspruch 2,
wobei der offenporige Schaumstoffkörper (14) ein Hohlvolumen (14a) aufweist und umschließt.

4. Luftfeder (1) nach Anspruch 1,
wobei der offenporige Schaumstoffkörper (14) innerhalb der Druckkammer (A) angeordnet ist.

5. Luftfeder (1) nach Anspruch 4,
wobei der offenporige Schaumstoffkörper (14) innerhalb der Druckkammer (A) direkt zwischen dem Kolben (10) und der Platte (11) angeordnet ist.

6. Luftfeder (1) nach Anspruch 4 oder 5,
wobei der offenporige Schaumstoffkörper (14) innerhalb der Druckkammer (A) auf dem Kolben (10) oder unter der Platte (11) angeordnet ist.

7. Luftfeder (1) nach Anspruch 5 oder 6,
wobei der offenporige Schaumstoffkörper (14) federelastisch ausgebildet ist.

8. Luftfeder (1) nach Anspruch 1,
wobei der offenporige Schaumstoffkörper (14) außerhalb der Druckkammer (A) angeordnet ist,
wobei der offenporige Schaumstoffkörper (14) luftführend mit der Druckkammer (A) in Kontakt steht.

9. Luftfeder (1) nach Anspruch 8,
wobei der offenporige Schaumstoffkörper (14) innerhalb eines Behälters (14b) angeordnet ist,
wobei der Behälter (14b) mittels einer Behälterverbindung (14c) luftführend mit der Druckkammer (A) in Kontakt steht.

10. Fahrzeug, vorzugsweise Straßenfahrzeug oder Schienenfahrzeug,
mit wenigstens einer Luftfeder (1) nach einem der vorangehenden Ansprüche,
wobei die Luftfeder (1) einen Kolben (10), eine Platte (12) und einen Balg (11) aufweist, welcher zwischen Kolben (10) und Platte (12) angeordnet ist,
wobei Kolben (10), Platte (12) und Balg (11) gemeinsam eine Druckkammer (A) bilden,
**gekennzeichnet durch**
wenigstens einen offenporigen Schaumstoffkörper (14), welcher luftführend mit der Druckkammer (A) in Kontakt steht.
